# EUROPEAN PATENT APPLICATION

(11) **EP 2 537 999 A1**
(43) Date of publication of application: **26.12.2012**
(21) Application number: 11744618.7
(22) Date of filing: 15.02.2011
(51) Int. Cl.: E04H 9/02, F16F 7/12, F16F 15/04

(54) **FASTENING DEVICE**

(30) Priority: 22.10.2010 JP 2010237295; 17.09.2010 JP 2010209581; 16.02.2010 JP 2010031651
(71) Applicant: Okura, Kenho, Namerikawa-shi, Toyama 936-0874 (JP)
(72) Inventor: Okura, Kenho, Namerikawa-shi, Toyama 936-0874 (JP)
(74) Representative: Michalski Hüttermann & Partner
(86) International application number: PCT/JP2011/053108
(87) International publication number: WO 2011/102332

(57) **Abstract**

A fasting device that fastens a supporting member such as a foundation plate (42) to a connecting member such as a pillar (51) is composed of a bearing body (11), shock absorbing bodies (38), anchoring implements (55), etc. The bearing body (11) is disposed at the center of a space (S) where the supporting member and the connecting member face each other, and comprises a basic plate (12) which is in surface contact with the supporting member, a mounting plate (14) which is in surface contact with the connecting member, and connecting sections which connect both of these plates. The shock absorbing bodies (38) are formed using U-shaped leaf springs or the like, and are disposed at the outer edges of the space (S) where the supporting member and the connecting member face each other. Reaction forces are generated in the shock absorbing bodies (38) according to the displacement of the connecting member or the like.

## Description

### Technical Field

The present invention relates to a fastening device used at the time of fixing a pillar to a foundation or fastening a cross beam to a pillar in various wooden structures.

### Background Art

Wooden framed buildings, mainly employed in small-scaled buildings such as residential houses, have been spreading in larger-scaled buildings such as a public facility since glue-laminated wood with a large cross section has been manufactured and introduced recent years. In domestic wooden houses, timber framework method using a foundation, pillars, beams, and the like is the mainstream. However, in the case of larger-scaled buildings, the Rahmen (rigid-frame) structure in which glued laminated timber having a large cross section is assembled in a portal type or the like is often employed. In the wooden Rahmen structure, it is necessary to assure rigidity of a part that fastens members such as a foundation and a pillar or a pillar and a beam, therefore as disclosed in Patent Literature 1 have been proposed.

Patent Literature 1 discloses a technique of connecting a vertical lumber piece corresponding to a pillar and a lateral lumber piece corresponding to a beam via a basic metal fitting and an accessory metal fitting and forming a tapered part and a reception part that are paired, at both upper and lower ends of the basic and accessory metal fittings. One of the metal fittings is attached to a side surface of the vertical lumber piece, and the other metal fitting is attached to an end surface of the lateral lumber piece. After that, by inserting the tapered parts in the metal fittings to the reception parts of the other metal fittings, the lateral lumber piece is coupled to the vertical lumber piece. According to the technique, the tapered part has an inclined surface, so that the metal fittings are naturally closely attached to each other. Therefore, the rigidity of the fastening part can be assured effortlessly. If attachment of the metal fittings becomes loose due to distortions of the lumber pieces through natural causes over time, the rigidity deteriorates, and the Rahmen structure cannot be maintained. Therefore, the metal fittings are fixed to the members via lag screws.

The lumber piece has poor toughness against external forces and is breakable such that when a load exceeds a limit, a crack promptly develops, and the lumber piece is broken all at once. The lumber is produced by nature such that strength of the lumber varies due to various factors, such as, the presence/absence of a knot, water content, and the like. To address the features peculiar to the lumber, a technique as disclosed in Patent Literature 2 is proposed. A vibration damping structure of fastening two members such as a pillar and a beam by using an elasto-plastic damper made of metal is disclosed. The elasto-plastic damper has an H shape obtained by connecting two flanges by a web, and a notch is formed in the web. When the web is elasto-plastic deformed at the time of an earthquake, energy is absorbed, and breakage of the lumber can be prevented.

Similar techniques to Patent Literature 2 are described in Patent Literatures 3 and 4. Literature 3 discloses a technique regarding a structure of fixing a wooden pillar to a pillar base part, which is characterized in that an anchor member buried in a foundation to fix a pillar is provided with a vibration damping function. Literature 4 is directed to attenuate quakes quickly at the time of an earthquake in a wooden structure and is characterized in that a pillar and a beam are fastened by a joining metal fitting having a plate spring shape.

### Prior Art Literature

### Patent Literature

Patent Literature 1: Japanese Patent Application Laid-open Publication No. 2007-132168
Patent Literature 2: Japanese Patent Application Laid-open Publication No. 2005-61058
Patent Literature 3: Japanese Patent Application Laid-open Publication No. 2002-256628
Patent Literature 4: Japanese Patent Application Laid-open Publication No. H04-261935

### Disclosure of Invention

### Problems to be Solved by the Invention

As described above, wood has inherent problems, such as, being breakable and variations in strength. To mitigate the problems, an effective measure is to absorb energy by deforming a fastening elasto-plastic device, as disclosed in Patent Literature 2. However, when the fastening device has too much flexibility, rigidity becomes insufficient. Unignorable deformations may be caused by daily load fluctuations and, moreover, habitation may also be influenced by the deformations. Consequently, a fastening device used in a rigid-frame structure has, preferably, rigidity, and during earthquakes displays flexibility so that a crack in a member can be prevented.

If a building experiences the effects of an earthquake such that a fastening device is plastic-deformed, the fixing between the fastening device and a joint between the fastening device and a wooden piece becomes loose. The post-plastic-deformed device would not have the benefit of the pre-plastic-deformed device during subsequent aftershocks, and the building may be largely damaged. Therefore, repeated excessive loads should be considered in the design of the fastening device. Further, costs and time related to repairs and burdens of the occupants for the repairs when the aftershocks stop should be low.

The present invention has been made to provide a solution to address these issues and a design of a fastening device with an objective to assure rigidity of a fastened part and, moreover, when excessive loads are applied, to prevent structural damage.

### Means for Solving the Problems

An invention described in claim 1 for solving the problem relates to a fastening device for fastening a supporting member and a connecting member that are adjacent to each other such as a pair of a foundation plate and a pillar or a pair of a pillar and a cross beam, including: a bearing body disposed in a space in which the supporting member and the connecting member face each other; a plurality of shock absorbing bodies disposed near outer rims in the space; anchoring implements embedded in the supporting member and/or the connecting member to fix the bearing body and the shock absorbing body; and a bolt for fixing the bearing body and the shock absorbing body. The bearing body includes a basic plate that is in surface contact with the supporting member, a mounting plate that is in surface contact with the connecting member, and a connecting section connecting the basic plate and the mounting plate in substantially a center of the space, and the shock absorbing body has elasticity to generate reaction force in accordance with displacement of the space, one end of the shock absorbing body is fixed to the basic plate or any of the anchoring implements in the supporting member, and the other end is fixed to the mounting plate or any of the anchoring implements in the connecting member.

The fastening device according to the present invention is provided to integrate adjacent two members such as a foundation and a pillar or a pillar and a beam in various wooden structures and use in a wooden rigid-frame structure where members are assumed to be firmly fastened. The supporting member refers to a member closer to the ground out of two members to be fastened. The connecting member refers to a member supported in the air by the supporting member. The present invention relates to a case of fastening wooden pieces including glued laminated timbers such as a pillar and a beam and also a case of fastening a wooden piece to concrete or a steel member. For convenience, the concrete or the steel member will be also called supporting members.
In the space between two members to be fastened, side surfaces or end surfaces of the members face each other with a gap therebetween. In this space, the bearing body and the shock absorbing body are positioned.

The bearing body includes a basic plate that is in surface contact with the supporting member, a mounting plate that is in surface contact with the connecting member, and a connecting section integrating the basic plate and the mounting plate. The bearing body is generally made of metal and has an H-like shape. Only one bearing body is disposed in the center of the border of the two members and has the function of transmitting axial force applied to the connecting member to the supporting member. Each of the basic plate and the mounting plate is attached to the supporting member and the connecting member via bolts, respectively. Thereby, in both of the plates, circular holes to which the bolts are inserted are formed.

The connecting section is provided to maintain the gap between the basic plate and the mounting plate and that the connecting section is assumed to have a sufficient strength at least in the compression direction. The connecting section transmits the axial force applied to the connecting member to the supporting member. It is also assumed that the connecting section has a bendable structure so that, in the case where a bending moment acts on the connecting member, the mounting plate can be displaced in accordance with the moment. Consequently, a block having a large cross section and is unbendable cannot be used as the connecting section.

A configuration example of the connecting section may be a simple plate connecting the center of the basic plate and the center of the mounting plate. By locally forming notches in both side surfaces of the plate, bendability to an excessive load is assured. The parts in which notches are formed still need to be sufficiently rigid such that only minor displacement can be found against a usual axial force. For a part to which only compressed load is normally applied such as a lower part of a pillar, the connecting section may have a detachable structure.

The shock absorbing bodies are disposed near the outer rim in the space where the supporting member and the connecting member face each other and are attached so as to straddle the supporting member and the connecting member. At least two shock absorbing bodies are necessary for a single fastening part and are disposed symmetrically around the center of the bearing body as a reference. Therefore, when the fastening part has an elongated rectangular shape, the shock absorbing bodies are disposed so as to sandwich the center of the bearing body. The shock absorbing body has the function of absorbing energy and displacement to lessen the load applied to the members by being elastically or plastically deformed when external force is received. The shock absorbing body also transmits axial force and shear force. The shock absorbing body has to have rigidity to a degree that it is substantially regarded as a rigid-frame structure at an ordinary load, and a member having a small spring constant is not preferred.

An example of the shock absorbing body is a simple plate spring obtained by just bending a steel plate in a U shape. When one of outside surfaces of the plate spring is attached to the supporting member and the other outside surface is attached to the connecting member, an intermediate semicircular part functions as a spring. By changing the length, thickness, and the like of the plate spring, the spring constant can be changed. Optimum design according to load conditions is easy. The shape of the plate spring is not limited to the U shape but an arbitrary shape such as a Z shape or a cylindrical shape can be selected. In addition, a perforated plate obtained by cutting out a plurality of parts in a steel plate can be also used as the shock absorbing body.

The shock absorbing body can be directly attached to the supporting member and the connecting member or attached to the basic plate and the mounting plate of the bearing body. Since the basic plate and the mounting plate are integrated with the supporting member and the connecting member, even when the shock absorbing bodies are attached so as to straddle the basic plate and the mounting plate, the function is unchanged. In this case, however, the basic plate and the mounting plate are set to have the same size as that of the end surface shape of the connecting member or the like, so that the shock absorbing bodies can be disposed properly.

The anchoring implements are used to firmly integrate the bearing body and the shock absorbing body with a member. Since large loads are expected to be applied to the bearing body and the shock absorbing body, sufficient consideration is necessary also for the attachment to the member, and a simple wood screw or the like cannot be used from the viewpoint of strength. When a member is made of wood, a anchoring implement such as a lag screw is disposed in the member, and the bearing body or the shock absorbing body is attached via the anchoring implement. A female screw is used in an end surface of the anchoring implement, and the bearing body or the shock absorbing body is made to come into contact with the end surface. After that, a bolt is inserted and fastened, so that the bearing body or the shock absorbing body is integrated with the member via the anchoring implement. Examples of the anchoring implement include not only the lag screw but also a deformed bar.

An invention described in claim 2 relates to a structure of a connecting section of a bearing body, and the connecting section has a lower arm projected from the basic plate, an upper arm projected from the mounting plate, and a pin penetrating the lower arm and the upper arm and axially supporting the basic plate and the mounting plate so as to be rotatable.

At least two lower arms or upper arms are arranged in parallel with a predetermined gap therebetween, the other arms are disposed so as to be engaged with the arranged lower or upper arms. When the other arms are fit in the arranged arms and a pin having a circular cross section is inserted so as to penetrate all of the arms, the basic plate and the mounting plate are integrated via the pin. Each of the upper and lower arms is rotatable about the pin as a fulcrum, thereby realizing swing of the basic plate and the mounting plate.

With such a configuration, the bearing body can transmit axial force and shear force but cannot transmit bending moment. Consequently, the role of the bearing body and that of the shock absorbing body can be divided and each of the bearing body and the shock absorbing body can be optimally designed according to a load condition. In the case of using the bearing body lying sideways, a hook can be used as the upper arm of the mounting plate. The hook has a shape in which a retaining groove is cut upward from bottom and retains the pin deep inside of the retaining groove. Consequently, separation between the basic plate and the mounting plate is easily accommodated.

An invention described in claim 3 relates to an example of the shock absorbing body. The shock absorbing body is a stud bolt in which a left screw is used at one end and a right screw is used at the other end, and internal screws in which the stud bolts are screwed are provided in outer rims of the basic plate and the mounting plate. In the present invention, the stud bolts are used as the shock absorbing bodies. The stud bolt is also called a full thread bolt and is obtained by forming a male screw in a simple round rod. In the present invention, however, a left screw is used at one end, and a right screw is used at the other end. Naturally, the stud bolt is disposed so as to connect the basic plate and the mounting plate, and its both ends are fixed to the respective plates. It is necessary to make the stud bolt to perform the original function by using a material that tends to cause an elasto-plastic deformation such as a low-yield-point steel.

The internal screw is a female screw in which the stud bolt is screwed and is positioned concentrically with both of the basic plate and the mounting plate. Since the right and left screws are used in the stud bolt, one of the internal screws in the basic plate and the mounting plate is set as the left screw, and the other internal screw is set as the right screw. Although the internal screws may be simple female screws, to assemble or detach the stud bolt, the internal screw may take a structure to be split by a diameter line of the internal screw. The disposing method for the stud bolt, the number of stud bolts to be used, and the like can be freely determined.

An invention described in claim 4 also relates to an example of the shock absorbing body. The shock absorbing body is a shaft having a flange-shaped or groove-shaped stepped part in a side peripheral surface near both ends, and a restrainer retaining the step part is provided on outer rim of the basic plate and the mounting plate. In the present invention, as the shock absorbing body, a shaft (rod member) is used and disposed so as to connect the basic plate and the mounting plate. The stepped part is provided to attach the shaft to the basic plate or the mounting plate, is a flange-shaped part projected from the side peripheral surface of the shaft or a groove-shaped part obtained by cutting the side peripheral surface, and is formed near the end. The restrainer is attached to the basic plate and the mounting plate and is a part in which the stepped part is fit to retain the stepped part securely.

As an example of the stepped part and the restrainer combination, the flange-shaped stepped part is provided at both ends of the shaft, and the groove-shaped restrainers in which the stepped parts are fit are attached to the basic plate and the mounting plate. In the configuration, the restrainer has to be detachable so that assembly and detachment of the shaft can be performed smoothly. In addition, also with respect to the shaft, it is necessary to make the shaft display the original function by using a material that tends to cause an elasto-plastic deformation such as a low-yield-point steel.

### Efficacy of the Invention

By constructing the fastening device by the bearing body and the shock absorbing body or the like as in the invention of claim 1, the compressive load acting between the supporting member and the connecting member is transmitted directly by the bearing body, and the rigidity of the fastened part can be assured. Although the bending moment acting on the connecting member is transmitted to the supporting member via the shock absorbing bodies, since plate springs or the like are used as the shock absorbing bodies, large spring constants can be easily obtained and, moreover, at least two shock absorbing bodies are disposed. Consequently, deformation caused by ordinary load fluctuation is small, and the supporting member and the connecting member that are fastened can be regarded as a rigid-frame structure. Further, when a shock load different from the ordinary load is applied during an earthquake or the like, the energy is absorbed by deformation of the shock absorbing bodies. Consequently, the load acting on major members and the connecting members is lessened, breakage such as a crack is prevented, and damage to a building is mitigated.

Also when a shock load is applied, if plastic deformation does not occur in the bearing body and the shock absorbing body, the performance does not deteriorate after that. Even if plastic deformation occurs, a load applied to members, bolts, and the like is lessened due to the deformation, crack of the members, loosening of the bolts, and the like can be prevented, and the strength of the part around the fastening device does not deteriorate. Moreover, at the time of restoring a building after an earthquake, only the bearing body and the shock absorbing body would be replaced, and the pillar and the like are maintained as they are. Consequently, repair costs and time can be minimized and the inconveniences to occupants are reduced.

As the invention described in claim 2, with respect to the connecting section of the bearing body, by making the basic plate and the mounting plate rotatable by interposing the arms and the pin, the bearing body does not transmit the bending moment. As a result, the functions of the bearing body and that of the shock absorbing body are clearly divided. Both of the bearing body and the shock absorbing body can be optimally designed according to a load condition. Sufficient rigidity is assured and, moreover, during an earthquake or the like, flexibility can be reliably achieved. Since the mounting plate is rotatable, even when a shock load is received, the connecting section is not plastic-deformed. As a repair after that, it is sufficient to replace only the shock absorbing body.

As the invention described in claim 3, by using the stud bolts as the shock absorbing bodies and changing the material and the cross section of the stud bolts, the optimum fastening device that is capable of freely adjusting the behavior with respect to the load and that is adapted to circumstances of a place where it is used can be provided. As the invention described in claim 4, also in the case of using the shaft as the shock absorbing body, by changing the material and the cross section of the shaft, a similar effect can be anticipated.

### Brief Description of Drawings

FIG. 1 shows a perspective view of a shape example of a fastening device according to the present invention and a use state of the device;
FIG. 2 shows a perspective view of a detailed shape of a bearing body in FIG. 1;
FIGS. 3 show longitudinal sections where a foundation plate and a pillar are fastened by using the fastening device of FIG. 1 and show (a) a normal state and (b) a state where the fastening device is deformed, respectively;
FIG. 4 shows a longitudinal section of where a pillar and a beam are fixed by using the fastening device of FIG. 1;
FIG. 5 shows (a) a perspective view of a first shape example of the bearing body, in which a basic plate and a mounting plate are coupled via an intermediate plate, (b) shows a side view of the first shape example of the bearing body, and (c) shows a front view of the first shape example of the bearing body;
FIG. 6 shows (a) a perspective view of a second shape example of the bearing body, in which the basic plate and the mounting plate are coupled via an intermediate plate, (b) shows a side view of the second shape example of the bearing body, and (c) shows a front view of the second shape example of the bearing body;
FIG. 7 shows a perspective view of a third shape example of the bearing body, in which a recessed face and an axial rod are interposed between the basic plate and the mounting plate;
FIG. 8 shows (a) a perspective view of a first shape example of the entire fastening device, and (b) shows a perspective view of a second shape example of the entire fastening device;
FIG. 9 shows a perspective view of a shape example of a fastening device used to fix a pillar having a large cross section;
FIG. 10 shows (a) a perspective view of a fourth shape example of the bearing used to fix a pillar having a large cross section, and (b) shows a cross section taken along line A-A in (a);
FIG. 11 shows (a) a perspective view of a fifth shape example of the bearing used to fix a pillar having a large cross section, and (b) shows a cross section taken along line B-B in (a);
FIG. 12 shows (a) a perspective view of a form of fixing a beam to a side surface of a pillar by using the fastening device according to the present invention and using U-shaped plate springs as the shock absorbing bodies, and (b) shows a perspective view of the shape of the mounting plate and a hook;
FIG. 13 shows a perspective view of a final form of FIG. 12;
FIG. 14 shows a perspective view of a form of fixing a beam to a side surface of a pillar by using the fastening device according to the present invention and using a perforated plate as the shock absorbing bodies;
FIG. 15 shows a perspective view of a final form of FIG. 14;
FIG. 16 shows (a) a perspective view of a third shape example of the entire fastening device, using stud bolts as the shock absorbing bodies, and (b) shows a perspective view of a use state of the third shape example of the entire fastening device;
FIGS. 17 shows longitudinal sections for each of a state where a foundation and a pillar are fastened by using the fastening device of FIG. 16, and illustrate (a) a normal state, (b) a state where the fastening device is deformed, and (c) a state where the fastening device is being repaired, respectively;
FIG. 18 (a) shows a perspective view of a fourth shape example of the entire fastening device, using shafts as the shock absorbing bodies, and (b) shows a perspective view of a use state of the fourth shape example of the entire fastening device;
FIG. 19 shows a perspective view of a shape example of a fastening device used to fix a pillar having a large cross section, using plate-shaped members as the shock absorbing bodies;
FIG. 20 shows a perspective view of a final form of FIG. 19; and
FIG. 21 shows a perspective view of a shape example of a fastening device used to fix a pillar having a large cross section, using a perforated plate as the shock absorbing bodies.

### Mode for Carrying Out the Invention

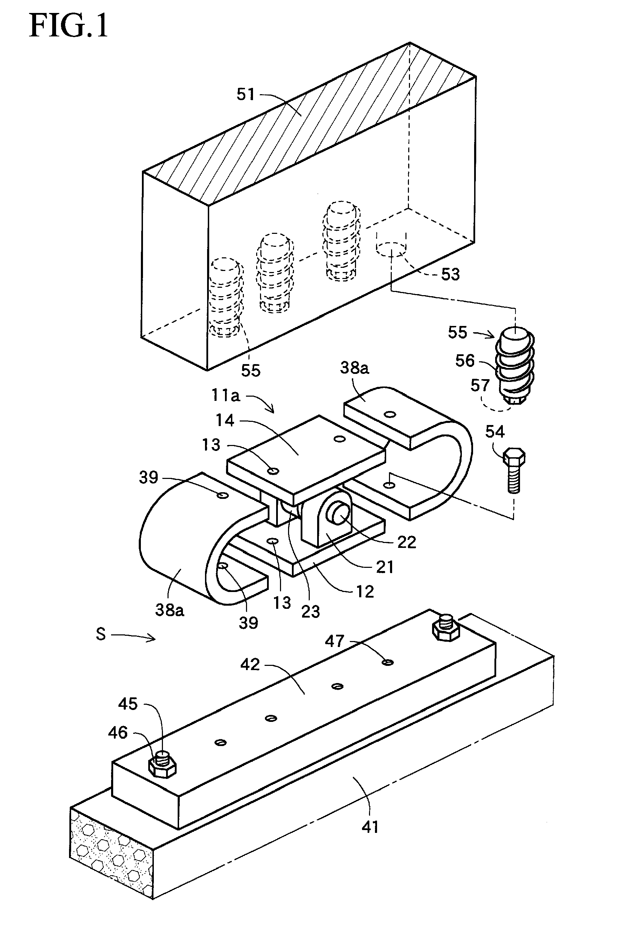

FIG. 1 shows a shape example of a fastening device according to the present invention and a use state of the device. In the diagram, a fastening device is used to fix a pillar 51 to a foundation 41. The pillar 51 is not directly coupled to the foundation 41 made of concrete but is coupled via a foundation plate 42 made of metal. Therefore, the foundation plate 42 is equivalent of a supporting member for fixing the pillar 51, and is fixed to the top surface of the foundation 41 by screwing nuts 46 in anchor bolts 45 embedded in the foundation 41. In the surface of the foundation plate 42, a plurality of female screws 47 are used in predetermined positions to attach the fastening device.

The pillar 51 fastened to the foundation plate 42 corresponds to a connecting member and is fixed in an upright state. The pillar 51 is made of a glued laminated timber to form an elongated cross section therein. To attach the fastening device, four anchoring implements are screwed in the lower end surface of the pillar 51. The anchoring implements are typically lag screws 55 made of a metal and having a columnar shape. In each of the lag screws 55, a spiral projection 56 is formed in a side peripheral surface, and a female screw 57 is formed in the lower end surface. On the bottom surface of the pillar 51, preparation holes 53 to which the lag screws 55 are screwed are formed.

The fastening device has an elongated configuration that fits the lateral cross section shape of the pillar 51. A bearing body 11a is positioned in the center of the fastening device, and is sandwiched by shock absorbing bodies 38a. The bearing body 11a is a structure obtained by integrating a basic plate 12 to be in contact with the foundation plate 42 and a mounting plate 14 to be in contact with the pillar 51 by a connecting section. The bearing body 11a is generally made of metal and transmits axial force and shear force acting on the pillar 51 to the foundation 41. In the surface of the basic plate 12 and the mounting plate 14, circular holes 13 are formed. When bolts 54 are inserted in the circular holes 13 toward the female screws 47 and 57 in the foundation plate 42 and the lag screws 55, the foundation plate 42 and the pillar 51 are integrated via the bearing body 11a.

The connecting section of the bearing body 11a is constructed with a lower arm 21, an upper arm 23, and a pin 22. Two lower arms 21 extending from the top surface of the basic plate 12 are arranged in parallel with a gap in between. The upper arm 23 extending from the bottom surface of the mounting plate 14 enters between the two lower arms 21. The pin 22 is inserted so as to penetrate an end part of each of the lower and upper arms 21 and 23, and the arms 21 and 23 are coupled rotatably about the pin 22 as a fulcrum. Therefore, when the foundation plate 42 and the pillar 51 are integrated only by the bearing body 11a and the wide side surface of the pillar 51 is seen, the pillar 51 can be easily tilted in the lateral directions.

Each of shock absorbing bodies 38a is a plate spring obtained by bending a steel plate in a U shape and is sandwiched in a state where the U shape lies on its side between the foundation plate 42 and the pillar 51. Therefore, the outer side surface on the lower side of the shock absorbing body 38a is in contact with the foundation plate 42, and the outer side surface on the upper side is in contact with the pillar 51. By assembling the shock absorbing bodies 38a on both right and left sides of the bearing body 11a, the pillar 51 can be stably supported. To reduce a displacement caused by ordinary load fluctuations, the thickness of the shock absorbing body 38a is adjusted to obtain a necessary spring constant. At approximate both ends of the shock absorbing body 38a, circular holes 39 to which the bolt 54 is inserted are formed.

The four lag screws 55 are screwed in the bottom surface of the pillar 51, and the top surface of the bearing body 11a and that of the shock absorbing body 38a are in surface contact with the end surface of the lag screw 55. Therefore, the load acting between the fastening device and the pillar 51 is distributed and transmitted into the pillar 51 via the entire lag screws 55. This avoids an otherwise concentrated load in a narrow region in the pillar 51, and may prevent a crack in the member.

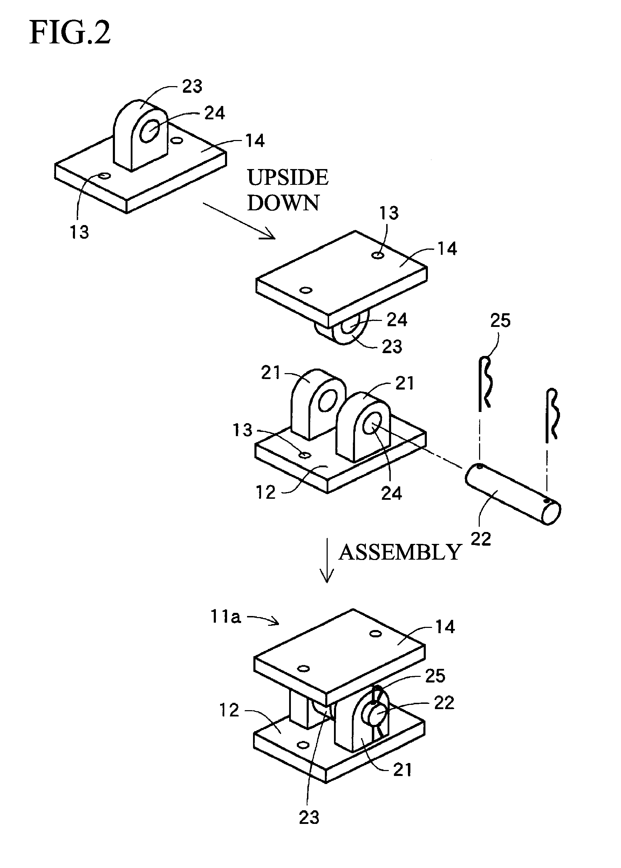

FIG. 2 shows a detailed shape of the bearing body 11a in FIG. 1. The bearing body 11a is obtained by integrating the basic plate 12 and the mounting plate 14 by a connecting section such as the pin 22. The basic plate 12 is provided with the two lower arms 21 that are arranged in parallel with a gap therebetween, and the one upper arm 23 is provided in the center of the mounting plate 14. In an end part of each of the arms 21 and 23, a pinhole 24 for inserting the pin 22 is formed. The inside diameter of the pinhole 24 is slightly larger than the outside diameter of the pin 22 so that the pin 22 can freely rotate. After the basic plate 12 and the mounting plate 14 are opposed to each other, all of the pinholes 24 are arranged concentrically, the pin 22 is inserted, and clips 25 are attached at both ends of the pin 22. The basic plate 12 and the mounting plate 14 are integrated and become rotatable about the pin 22 as a fulcrum.

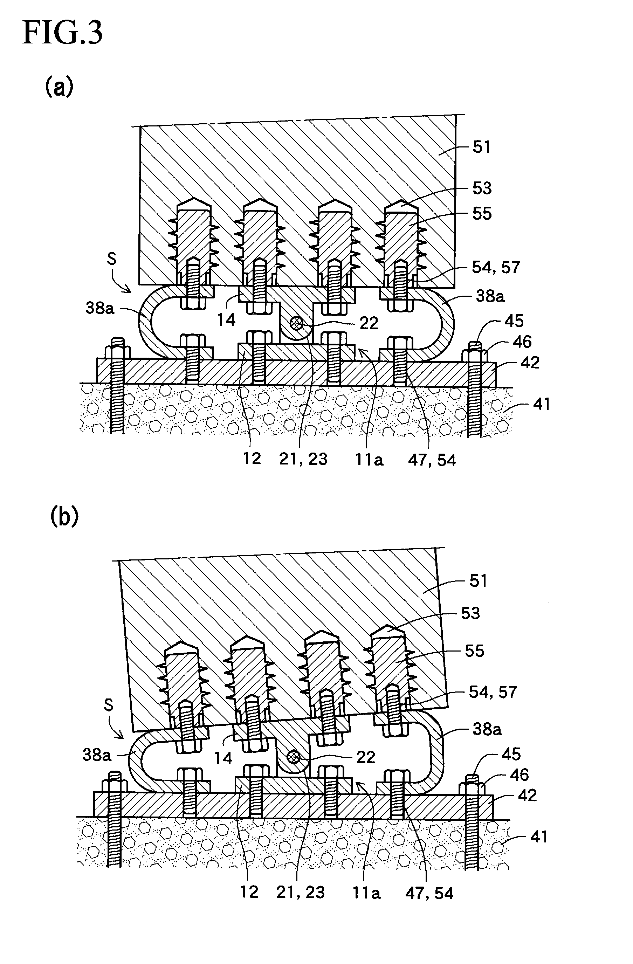

FIGS. 3 (a) and (b) show longitudinal sections of where the foundation plate 42 and the pillar 51 are fastened by using the fastening device of FIG. 1. When the foundation plate 42 and the pillar 51 are fastened correctly, as shown in FIG. 3 (a), the heights of the right and left shock absorbing bodies 38a are equal, and the pillar 51 is set perpendicularly. Therefore, vertical load and shear force acting on the pillar 51 is transmitted to both of the bearing bodies 11a and the shock absorbing bodies 38a. The bending moment that turns the pillar 51 in the lateral direction in the diagram is transmitted only by the right and left shock absorbing bodies 38a. Since only a small displacement occurs by daily load fluctuations in the shock absorbing bodies 38a, the foundation plate 42 and the pillar 51 are substantially rigidly connected and function as a rigid-frame structure.

When a shock load acts due to an earthquake or the like, horizontal loads acts on the pillar 51, and bending moments occur. When the bending moments become excessive, the shock absorbing bodies 38a are largely elastic-deformed. When the stresses exceed a limit, as shown in FIG. 3 (b), the left side is pressed, and the right side is stretched. By the deformation of the shock absorbing bodies 38a, the energy is absorbed, and the load acting on the pillar 51, the bolts 54, and the like is lessened. Consequently, a crack does not occur in the pillar 51. Although the pillar 51 tilts, it does not fall, so that safety can be assured also during an aftershock. Moreover, at the time of repairing the building, replacement of the shock absorbing bodies 38a is sufficient. Thus, cost and time necessary for reconstruction can be reduced.

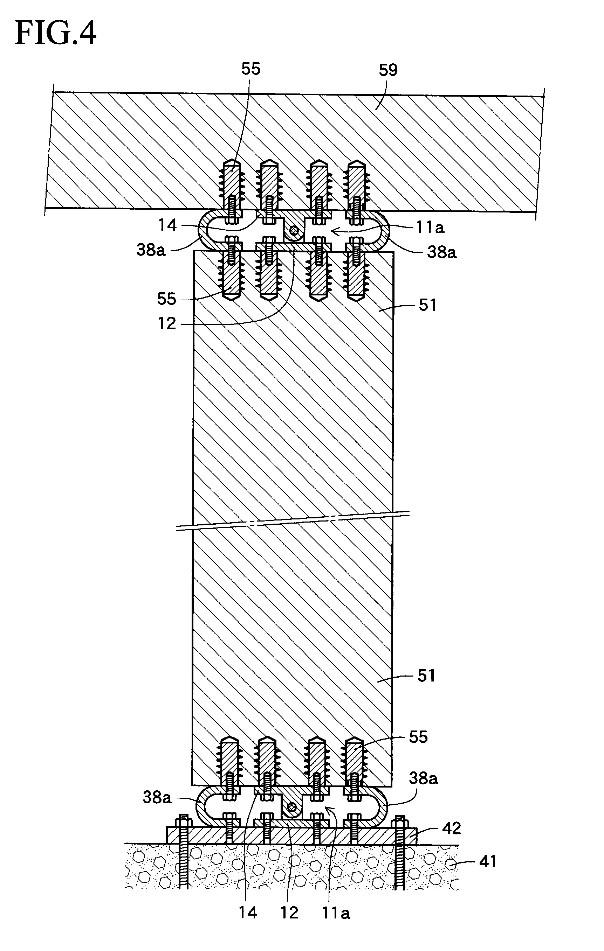

FIG. 4 shows a longitudinal section of where the pillar 51 and a cross beam 59 are fixed by using the fastening device of FIG. 1. The foundation plate 42 is fixed on the top surface of the foundation 41, and the pillar 51 is fixed to the foundation plate 42 via the fastening device. A fastening device is assembled also in the upper part of the pillar 51, and the cross beam 59 is fixed. The fastening device on the upper side has the same configuration as that on the lower side. The pillar 51 corresponds to the supporting member, and the cross beam 59 corresponds to the connecting member. Moreover, since both the pillar 51 and the cross beam 59 are wood, the lag screws 55 are screwed in both of them. As described above, the fastening device can be used not only for fixation of the pillar 51 but also for fastening of various members.

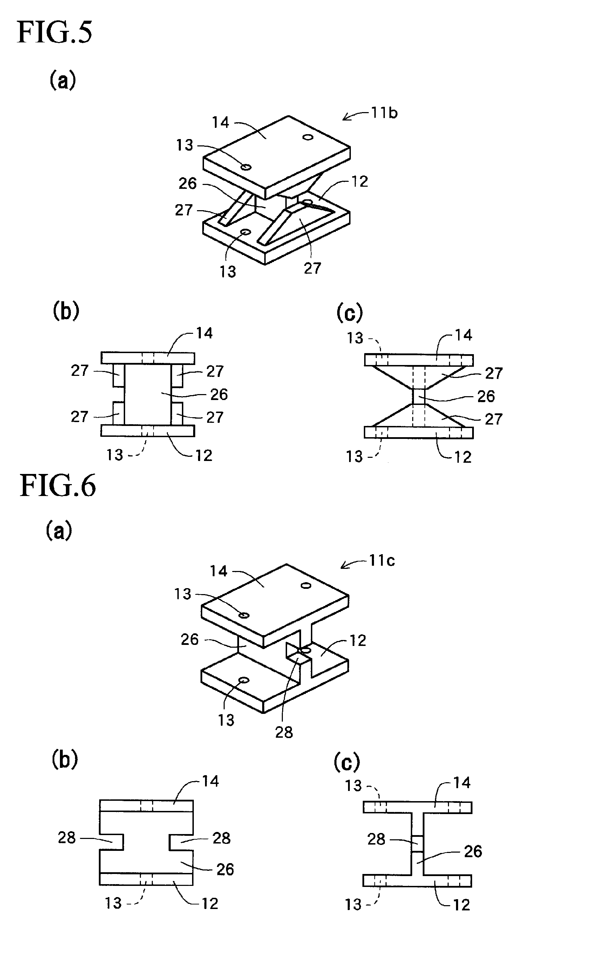

FIGS. 5 (a) to (c) and FIGS. 6 (a) to (c) show shape examples of the bearing body 11. Except for the form that the bearing body 11 can freely swing about the pin 22 as a fulcrum as shown in FIG. 2, an intermediate plate 26 can be used as the connecting section between the basic plate 12 and the mounting plate 14 like bearing bodies 1 Ib and 11c shown in FIGS. 5 (a) to (c) and FIGS. 6 (a) to (c). The intermediate plate 26 is a simple flat plate made of metal vertically connecting the center of the basic plate 12 and the center of the mounting plate 14 and is integrated with the basic plate 12 and the like by welding. The strength of the fastening device according to the present invention may be adjusted so that when excessive load is applied, the connecting section bends moderately to make the shock absorbing bodies 38 function effectively. However, ordinary vertical loads should not cause buckling.

In the first shape example of the bearing body 11 shown in FIGS. 5, ribs 27 having an isosceles triangle shape are assembled in the upper and lower sides so as to extend in the horizontal direction to make the intermediate plate 26 have moderate strength. The ribs 27 do not extend to the center part of the intermediate plate 26. When excessive load is applied, deformation occurs in the center part. In the second shape example of the bearing body 11 shown in FIG. 6, by providing notches 28 in both side surfaces of the intermediate plate 26, the deformation property is assured. In the configuration, to assure the strength of the intermediate plate 26, the width of the intermediate plate 26 is set to the same width as that of the basic plate 12 and the mounting plate 14. When the bearing body 11c is seen from the front, the shape is a simple H shape.

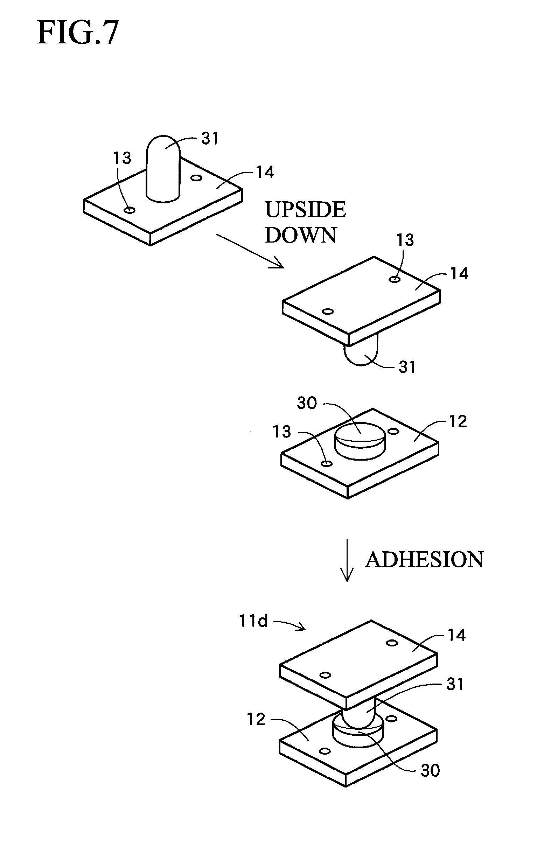

FIG. 7 shows a third shape example of the bearing body 11. In a bearing body 11d in the diagram, the connecting section does not integrate the basic plate 12 and the mounting plate 14. A circular recessed face 30 is formed in the top surface of the basic plate 12, and an axial rod 31 whose end surface is formed in a hemisphere shape is provided on the bottom surface of the mounting plate 14 opposed to the top surface. By making the axial rod 31 come into contact with the recessed face 30, vertical load is transmitted. Since the bearing body 11d can transmit only the load in the direction in which the basic plate 12 and the mounting plate 14 push each other, the use is limited to a lower part of the pillar 51 and the like. There is a case that a load in the opposite direction is applied to also such a part at the time of an earthquake or the like. In this case, disengagement of the connecting member is prevented by the shock absorbing body 38. In addition, when the curvature radius of the end of the axial rod 31 and that of the recessed face 30 are made coincided, the axial rod 31 and the recessed face 30 are in surface contact, so that stability improves.

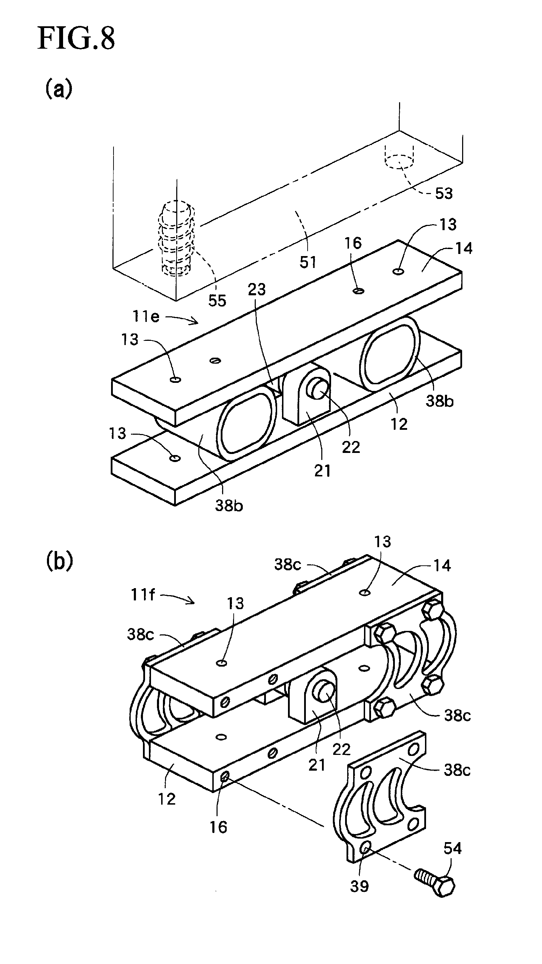

FIGS. 8 shows a shape example of the whole fastening device. In a bearing body 11e of a first shape example of the whole fastening device shown in FIG. 8 (a), different from FIG. 1 and the like, the mounting plate 14 is wide and is in contact with the entire bottom surface of the pillar 51. In addition, the basic plate 12 has the same size as that of the mounting plate 14. The basic plate 12 and the mounting plate 14 are integrated via the lower arms 21 and the pin 22 disposed in the center, and the mounting plate 14 is freely rotatable. Shock absorbing bodies 38b each obtained by forming a steel plate in a cylindrical shape are used and sandwiched between the basic plate 12 and the mounting plate 14. The shock absorbing bodies 38b may be in contact with not only the supporting member and the connecting member but also the basic plate 12 and the mounting plate 14 as described above.

Also in a bearing body 11f of a second shape example of the whole fastening device shown in FIG. 8 (b), the basic plate 12 and the mounting plate 14 are wide. The shape of shock absorbing bodies 38c is largely different and a plate in which some inside parts are cut out like a perforated plate is used. To attach the shock absorbing bodies 38c, screw holes 16 are formed in side surfaces of the mounting plate 14 of the basic plate 12, and the circular holes 39 are formed in the shock absorbing bodies 38c. The shock absorbing bodies 38c can be attached to the side surfaces of the bearing body 11f via the bolts 54. The shock absorbing bodies 38c can be easily attached/detached, so that workability is high.

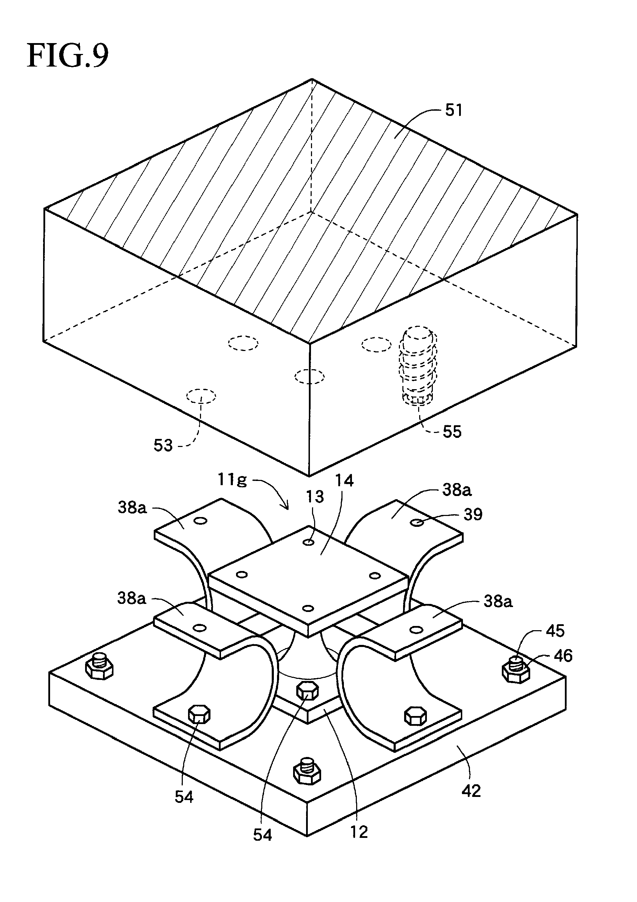

FIG. 9 shows a shape example of the fastening device used to fix the pillar 51 having a large cross section. The foundation plate 42 as a supporting member has a square shape according to the sectional shape of the pillar 51, and a bearing body 11g is disposed in the center of the foundation plate 42. In the bearing body 11g, the basic plate 12 and the mounting plate 14 are coupled by a connecting section having a round bar shape. As the shock absorbing bodies 38a, U-shaped plate springs are used. Four U-shaped plate springs are disposed at the gaps of 90 degrees. At the time of fixing the pillar 51 having a large cross section, at least three shock absorbing bodies 38a have to be used so that reaction force can be generated when the pillar 51 tilts in any direction.

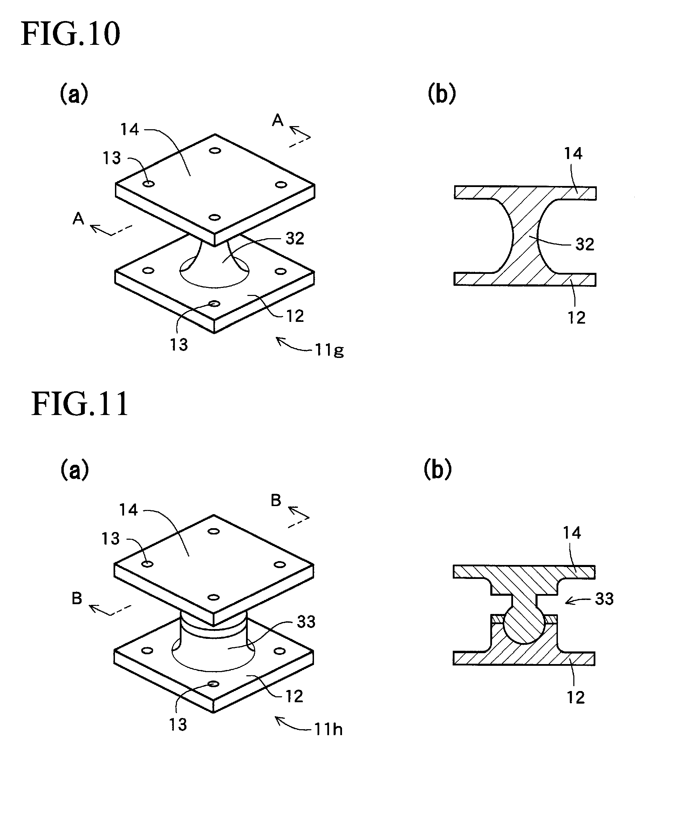

FIGS. 10 and FIGS. 11 show shape examples of the bearing body 11 used to fix the pillar 51 having a large cross section as shown in FIG. 9. A fourth shape example of the bearing body 11 shown in FIG. 10 is that shown in FIG. 9, and the connecting section between the basic plate 12 and the mounting plate 14 is a constricted shaft 32. The constricted shaft 32 has generally a circular cross section, and the diameter of the cross section decreases toward the center. Consequently, in the case where bending moment acts, the bearing body bends around the center part as a center. In a fifth shape example of the bearing body 11 shown in FIG. 11, a universal joint 33 is used as the connecting section. Therefore, the basic plate 12 and the mounting plate 14 can freely swing in any direction around a spherical body on the inside and transmit only the axial force and the shear force.

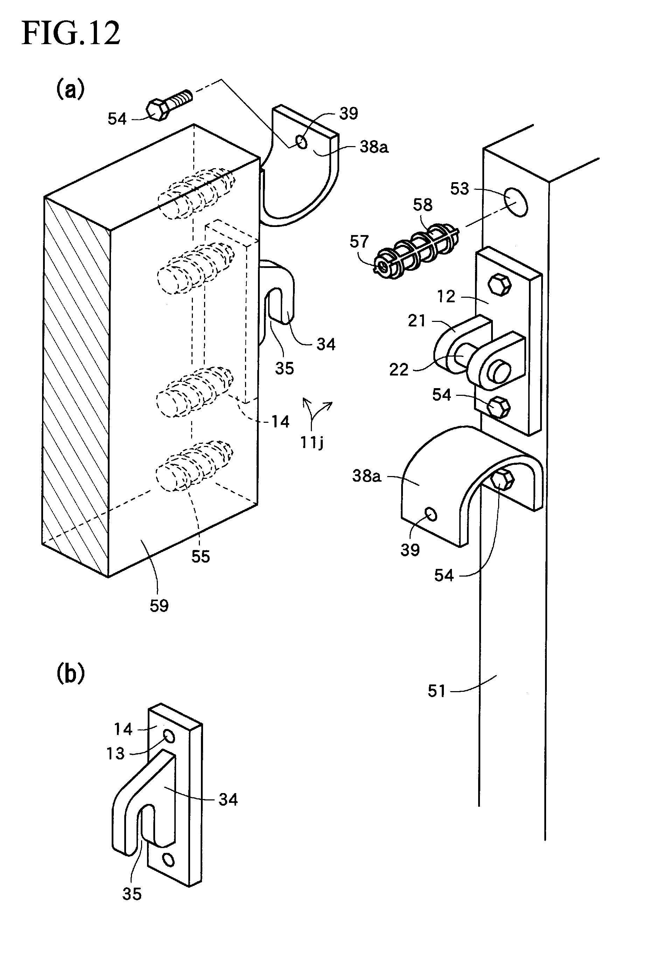

FIGS. 12 shows a form of fixing the cross beam 59 to a side surface of the pillar 51 using the fastening device according to the present invention. A bearing body 11j used here has a structure in which the basic plate 12 and the mounting plate 14 are integrated with a hook 34 projected from the surface of the mounting plate 14 on the pin 22 on the other side. As the shock absorbing bodies 38a, U-shaped plate springs are used. At the time of fastening the pillar 51 and the cross beam 59, in advance, the basic plate 12 is attached to the side surface of the pillar 51, and one of the shock absorbing bodies 38a is attached just below the basic plate 12. The mounting plate 14 is attached to the center of the end surface of the opposed cross beam 59 and, further, the other shock absorbing body 38a is attached above the mounting plate 14.

After that, when the cross beam 59 is lifted, moved over the pillar 51, and gradually lowered while its position is adjusted, the pin 22 enters deep in a retaining groove 35, and the cross beam 59 is temporarily attached to the pillar 51 via the bearing body 11j. After that, when the bolt 54 is inserted in the shock absorbing body 38a and fastened, fixation of the cross beam 59 is completed. As an anchoring implement embedded in the side surface of the pillar 51, a deformed bar 58 is used not the lag screw 55. The deformed bar 58 is integrated with the pillar 51 by an adhesive.

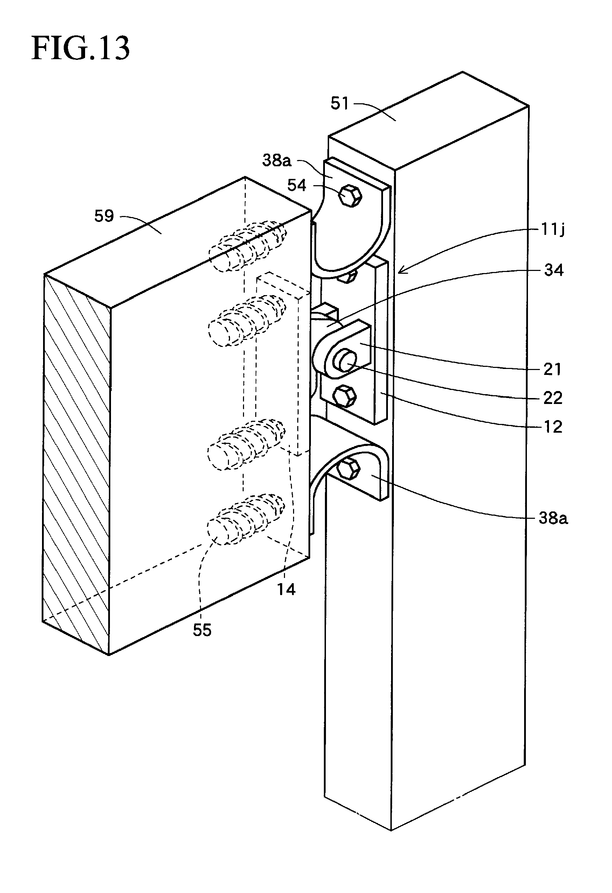

FIG. 13 shows a final form of FIG. 12. The pillar 51 and the cross beam 59 are fastened via the bearing body 11j and the shock absorbing bodies 38a. The vertical load and the axial force applied to the cross beam 59 are transmitted via the pin 22 and the hook 34, and the bending moment is transmitted via the shock absorbing bodies 38a. In such a manner, it is preferable to temporarily fix the cross beam 59 with the fastening device by taking a measure by providing the mounting plate 14 with the hook 34 in a part to which the cross beam 59 is fixed.

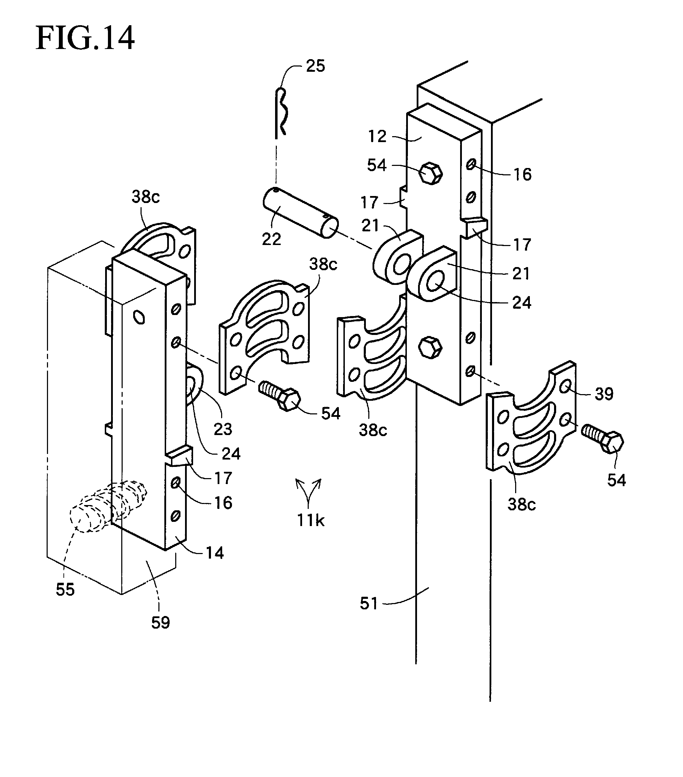

FIG. 14 also shows a form of fixing the cross beam 59 to the side surface of the pillar 51 by using the fastening device according to the present invention. The basic plate 12 and the mounting plate 14 of a bearing body 11k have almost the same size as that of the end surface of the cross beam 59, and shock absorbing bodies 38c each having a perforated form are used. Further, stoppers 17 for stopping the bottom surface of the shock absorbing bodies 38c are used in the side surfaces of the basic plate 12 and the mounting plate 14. After the cross beam 59 is temporarily fixed, the pin 22 is inserted in the pinholes 24.

Upon fastening the pillar 51 and the cross beam 59, the basic plate 12 is attached to the side surface of the pillar 51 in advance and, further, the shock absorbing bodies 38c are attached to both side surfaces of a lower part of the basic plate 12. The mounting plate 14 is attached to the end surface of the opposed cross beam 59 and, further, the shock absorbing bodies 38c are attached to both side surfaces of an upper part of the mounting plate 14. After that, when the cross beam 59 is lifted, moved over the pillar 51, and gradually lowered while its position is adjusted, the bottom surface of each of the shock absorbing bodies 38c comes into contact with the stopper 17 on the opposed side, and the cross beam 59 is temporarily attached to the pillar 51 via the shock absorbing bodies 38c and the stoppers 17. At this time, it is considered so that the pinholes 24 of the upper and lower arms 23 and 21 are concentrically aligned. When the pin 22 is inserted so as to penetrate the arms 21 and 23 and the clips 25 are attached, fixation of the cross beam 59 is completed.

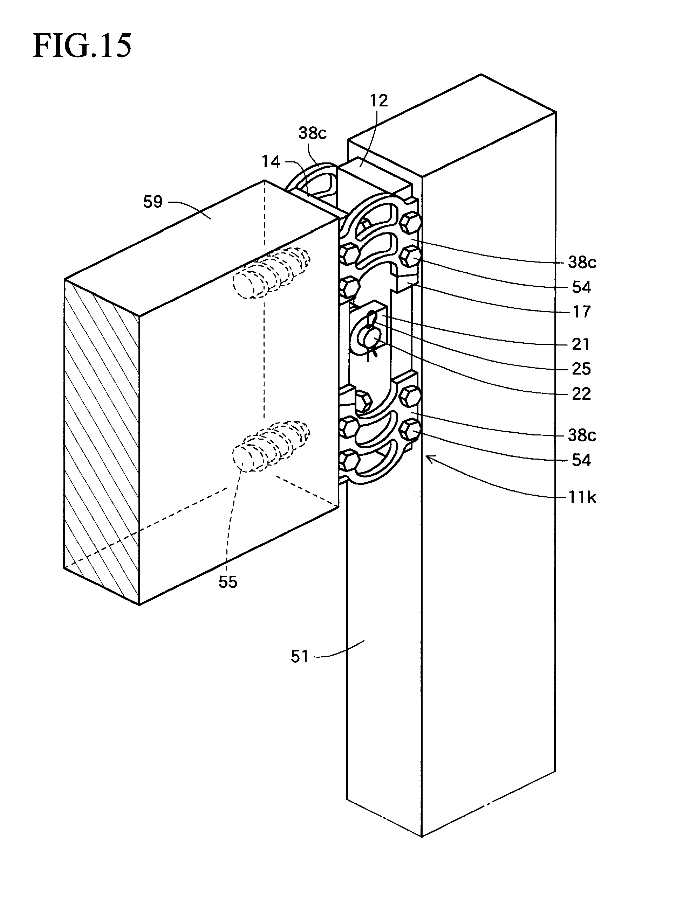

FIG. 15 shows a final form of FIG. 14. The pillar 51 and the cross beam 59 are fastened via bearing bodies 11k and the shock absorbing bodies 38c. The vertical load and the axial force applied to the cross beam 59 are transmitted via the lower arm 21, the pin 22, and the upper arm 23, and the bending moment is transmitted via the shock absorbing bodies 38c. The form of the diagram has excellent workability since the cross beam 59 can be temporarily fixed by using the shock absorbing bodies 38c and the stoppers 17.

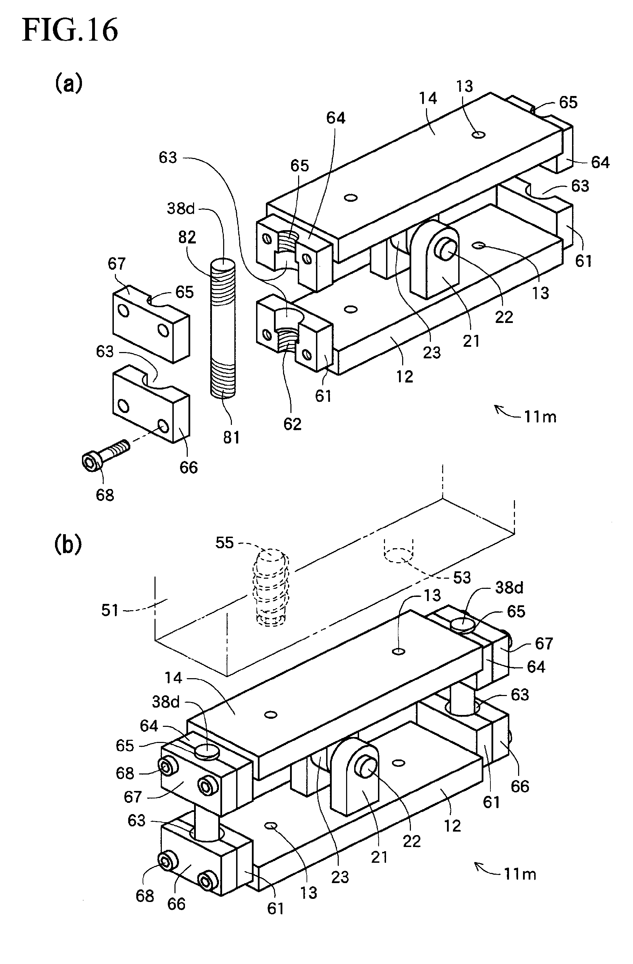

FIGS. 16 shows a third shape example of the whole fastening device. In a bearing body 11m of the third shape example, the mounting plate 14 is wide and is in contact with the entire bottom surface of the pillar 51. In addition, the basic plate 12 has the same size as that of the mounting plate 14. The basic plate 12 and the mounting plate 14 are integrated via the lower arms 21, the upper arm 23, and the pin 22 disposed in the center, and the mounting plate 14 is freely rotatable. As shock absorbing bodies, stud bolts 38d are used. At both ends of the basic plate 12 and the mounting plate 14, retainers 61 and 64 are attached by welding.

Pressing pieces 66 and 67 can be attached to the side surfaces of the retainers 61 and 64 via bolts 68. In a state where the retainers 61 and 64 and the pressing pieces 66 and 67 are integrated, the stud bolts 38d can be retained. For this purpose, in the borders between the retainers 61 and 64 and the pressing pieces 66 and 67, internal screws 62 and 65 as female screws are used so that the stud bolts 38d can be screwed. Further, next to the internal screws 62 and 65, guide holes 63 in which the stud bolts 38d are inserted are formed.

The lower end of the stud bolt 38d is a left screw 81, and the upper end is a right screw 82. Consequently, the internal screw 62 of the retainer 61 and the pressing piece 66 on the lower side (the side of the basic plate 12) is a left screw and, on the other hand, the internal screw 65 of the retainer 64 and the pressing piece 67 on the upper side (the side of the mounting plate 14) is a right screw. At the time of assembling the stud bolt 38d, the stud bolt 38d is made to come into contact with the retainers 61 and 64 in a state where the pressing pieces 66 and 67 are detached and, then, the bolts 68 attach the pressing pieces 66 and 67. After that, as necessary, the stud bolt 38d is rotated to adjust the gap between the basic plate 12 and the mounting plate 14.

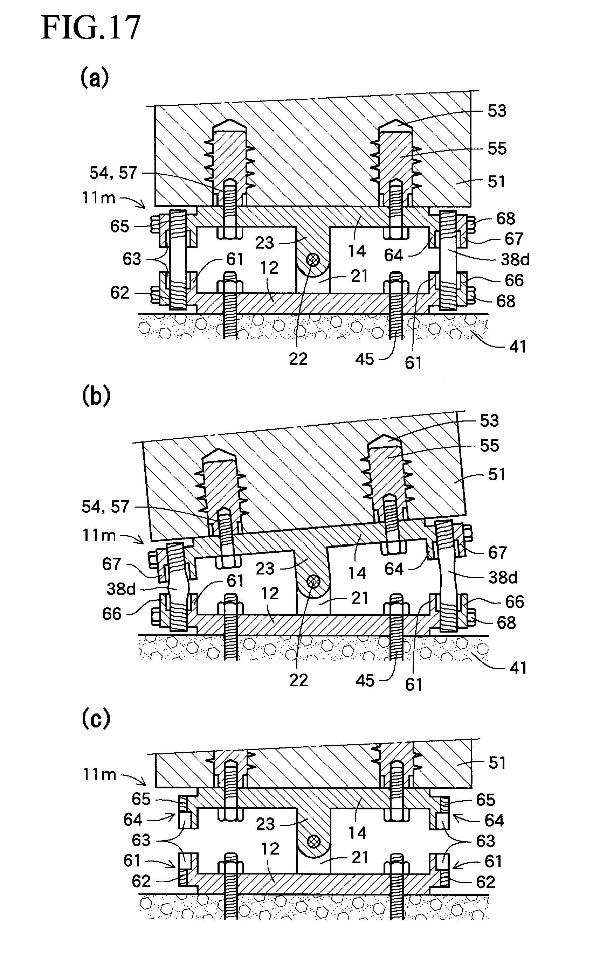

FIGS. 17 shows longitudinal sections of where the foundation 41 and the pillar 51 are fastened by using the fastening device of FIG. 16. In a normal state, as shown in FIG. 17 (a), the screw amount of the right and left stud bolts 38d is adjusted, the mounting plate 14 is horizontal, and the pillar 51 is upstanding. However, when an excessive horizontal load is applied to the pillar 51, as shown in FIG. 17 (b), one of the stud bolts 38d is deformed by pressure, and the other stud bolt 38d is stretched. By the deformation, energy is absorbed, and a damage exerted on the pillar 51 can be mitigated. The guide holes 63 are provided to prevent buckling when compressive load is applied to the stud bolts 38d. An intermediate part of the stud bolt 38d on the left side in the diagram is deformed by pressure, so that buckling is regulated by the guide holes 63. Even in a state where the stud bolts 38d are plastic-deformed, the stud bolts 38d are integrated with the basic plate 12 and the mounting plate 14. The rigidity of the fastening device is maintained.

After the stud bolt 38d is plastic-deformed, for repair, as shown in FIG. 17 (c), the bolts 68 and the pressing pieces 66 and 67 are detached, further, the initial stud bolts 38d are detached, and the tilt of the pillar 51 is corrected. Subsequently, new stud bolts 38d are assembled and, further, the pressing pieces 66 and 67 are attached. As described above, by employing the structure that the internal screws 62 and 65 can be separated by using the retainers 61 and 64 and the pressing pieces 66 and 67, the stud bolt 38d can be replaced even in a space sandwiched by the foundation 41 and the pillar 51.

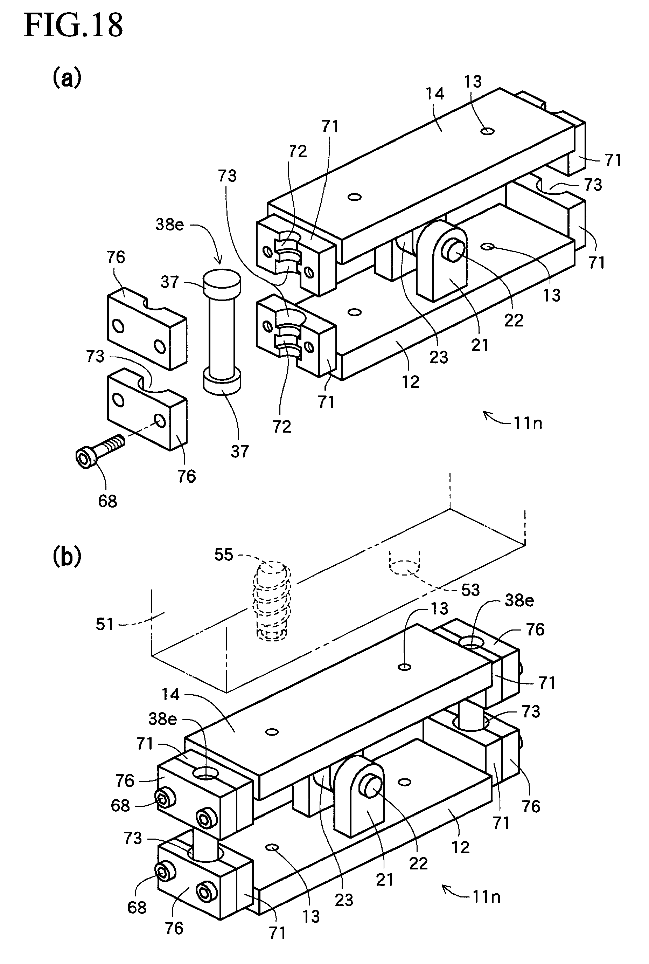

FIGS. 18 shows a fourth shape example of the whole fastening device. In a bearing body 11n in the fourth shape example, the mounting plate 14 is wide and is in contact with the entire bottom surface of the pillar 51. In addition, the basic plate 12 has the same size as that of the mounting plate 14. The basic plate 12 and the mounting plate 14 are integrated via the lower arms 21, the upper arm 23, and the pin 22 disposed in the center, and the mounting plate 14 is freely rotatable. As shock absorbing bodies, shafts 38e with a round rod shape are used. At both ends of the basic plate 12 and the mounting plate 14, retainers 71 are attached by welding. The upper and lower retainers 71 have the same shape and are disposed so that their guide holes 73 are opposed to each other. At both ends of the shaft 38e, flange-shaped stepped parts 37 are formed.

Pressing pieces 76 can be attached to the side surfaces of the retainers 71 via the bolts 68. In a state where the retainers 71 and the pressing pieces 76 are integrated, the shaft 38e can be retained. For this purpose, in the borders between the retainers 71 and the pressing pieces 76, restrainers 72 and guide holes 73 are formed so that the shafts 38e can be housed. The restrainer 72 is a part to which the stepped part 37 is fit and has the function of fixing the shaft 38e. The guide holes 73 have the function of regulating buckling of the shaft 38e also.

Even in the case where the shaft 38e is plastic-deformed by external force, the stepped part 37 is fit in the retainer 72. Consequently, the shaft 38e is not loosened from the basic plate 12 and the mounting plate 14, and the rigidity of the fastening device is maintained. At the time of replacing the shaft 38e that is plastic-deformed, it is sufficient to detach the pressing pieces 76 and pull the shaft 38e in the horizontal direction. Therefore, work can be done in a narrow space.

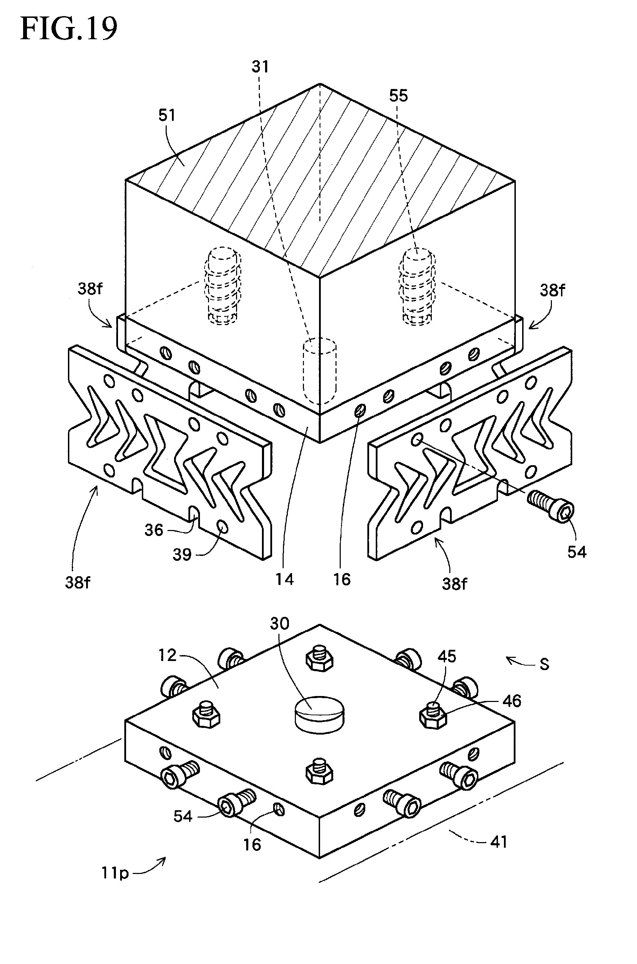

FIG. 19 shows a shape example of the fastening device used to fix the pillar 51 having a large cross section. The fastening device in the diagram is used to fix the pillar 51 (connecting member) to the foundation 41 (supporting member) and is disposed in the space S in which the bottom surface of the pillar 51 and the top surface of the foundation 41 face each other. A bearing body 11p for transmitting mainly downward load is constructed by the basic plate 12, the mounting plate 14, and the connecting section. The mounting plate 14 has the same size as the transverse section of the pillar 51 and is in contact with the bottom surface of the pillar 51. The basic plate 12 is mounted on the top surface of the foundation 41 and has the same size as the mounting plate 14. The basic plate 12 is fixed to the foundation 41 via the anchor bolts 45 projected from the top surface of the foundation 41 and the nuts 46 screwed to the end of the anchor bolts 45. Further, a disc-shaped steel plate is attached to the center of the basic plate 12 by welding, and the recessed face 30 having a mortar shape is formed in the top surface of the steel plate.

The entire mounting plate 14 is in contact with the bottom surface of the pillar 51. The lag screws 55 are screwed in the bottom surface of the pillar 51, the lower end surface of each of the lag screws 55 is in contact with the mounting plate 14, and the mounting plate 14 and the pillar 51 are firmly integrated. Further, the axial rod 31 is attached to the center of the mounting plate 14 by welding. The end of the axial rod 31 has a semispherical shape. By making the end come into contact with the recessed face 30, a connecting section capable of transmitting downward load is constructed. Naturally, the axial rod 31 can freely swing in the recessed face 30. The connecting section in the diagram is the same as that shown in FIG. 7.

The basic plate 12 and the mounting plate 14 are disposed so as to completely overlap each other. To the entire peripheries of both of the plates, plate-shaped shock absorbing bodies 38f are attached. The shock absorbing body 38f is obtained by finishing a steel plate in a predetermined shape. To assure deformability to the vertical load, parts each having a shape of the less than signor the like in the shock absorbing body 38f are cut out. When a shock load is applied, plastic deformation occurs to absorb the energy. The four shock absorbing bodies 38f have the same shape and are attached to the basic plate 12 and the mounting plate 14 by the bolts 54. Consequently, the circular holes 39 and bottom grooves 36 are formed in the shock absorbing bodies 38f, and the screw holes 16 are formed in the side surfaces of the basic plate 12 and the mounting plate 14.

At the time of actually fixing the pillar 51 to the foundation 41, the basic plate 12 is fixed to the top surface of the foundation 41, and the mounting plate 14 is attached to the bottom surface of the pillar 51. After that, the four shock absorbing bodies 38f are fixed to the side surfaces of the mounting plate 14 by the bolts 54. Subsequently, to some of the screw holes 16 provided in the side surfaces of the basic plate 12, which are paired with the bottom grooves 36 in the shock absorbing bodies 38f, the bolts 54 are inserted in advance. The bolts 54 should not to be completely fastened. Between the basic plate 12 and the head of the bolt 54, a space for inserting the bottom groove 36 is assured. In such a manner, at the time of fixing the pillar 51 to the foundation 41, the pillar 51 can be temporarily put using the bottom grooves 36. After that, when the bolts 54 are inserted in the remaining circular holes 39, fixation of the pillar 51 is completed. At the time point when the pillar 51 is temporarily positioned, the axial rod 31 is in contact with the recessed face 30. Consequently, the entire load of the pillar 51 is not applied to the bottom grooves 36.

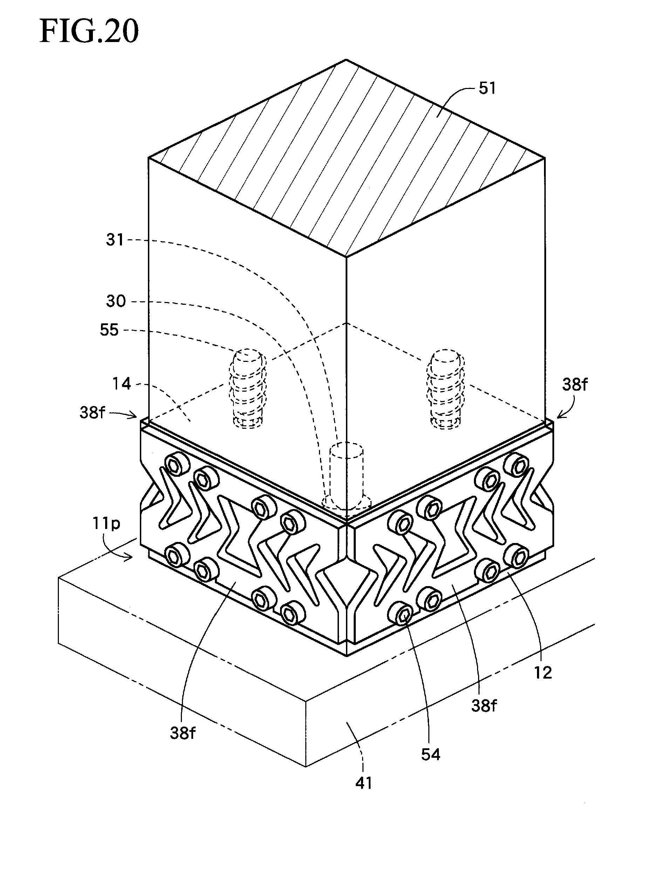

FIG. 20 shows a final form of FIG. 19. The basic plate 12 and the mounting plate 14 are opposed to each other with a predetermined distance therebetween. In the center, the recessed face 30 and the axial rod 31 are in contact, thereby transmitting downward load. In the entire periphery of the plates, the shock absorbing bodies 38f are attached via the bolts 54. When excessive horizontal load is applied to the pillar 51, the shock absorbing bodies 38f are plastic-deformed so that energy can be absorbed. In the case where upward load is applied during an earthquake or the like, the recessed face 30 and the axial rod 31 address the load. Consequently, all of the shock absorbing bodies 38f shall never be crushed. After the shock absorbing bodies 38f are actually plastic-deformed, the pillar 51 is made standing upward by a heavy machine or the like. Subsequently, the bolts 54 are detached, and the shock absorbing bodies 38f are replaced. During the replacement work, the recessed face 30 and the axial rod 31 receive downward load.

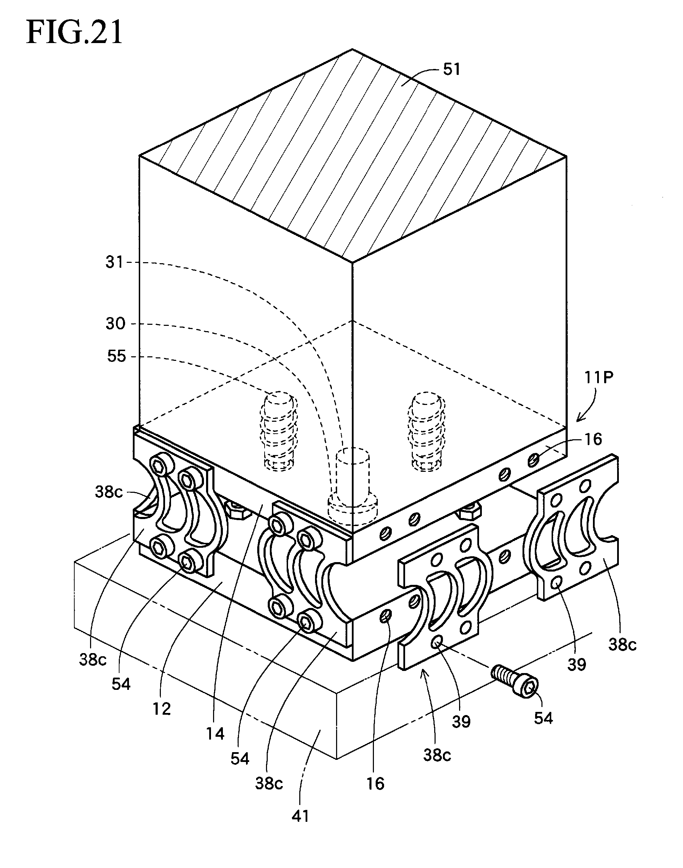

FIG. 21 shows a shape example of a fastening device used to fix the pillar 51 having a large cross section like FIG. 19. A bearing body 11p has the same configuration as that of FIG. 19, the basic plate 12 and the mounting plate 14 have the same size as that of the bottom surface of the pillar 51. In the center of both of the plates, a connecting section in which the recessed face 30 and the axial rod 31 are in contact is provided. As shock absorbing bodies 38c, members having a perforated plate similar to that of FIG. 8 and the like are used. Two shock absorbing bodies 38c are disposed per side surface of the pillar 51 so as to be opposed to each other. Like the other forms, also in this form, when excessive horizontal load is applied to the pillar 51, the shock absorbing bodies 38c are plastic-deformed, so that the energy can be absorbed. Moreover, the plastic-deformed shock absorbing bodies 38c can be easily replaced.

Although all of the connecting sections in FIGS. 19, 20, and 21 are constructed with the recessed face 30 and the axial rod 31 combinations, of course, the invention is not limited to the configuration. Like the bearing bodies 11g and 11h shown in FIGS. 10 and 11, the connecting section can be replaced with a member using the constricted shaft 32, a member using the universal joint 33, or the like.

### Description of Reference Numerals

- 11: Bearing body
- 12: Basic plate
- 13: Circular hole
- 14: Mounting plate
- 16: Screw hole
- 17: Stopper
- 21: Lower arm (connecting section)
- 22: Pin (connecting section)
- 23: Upper arm (connecting section)
- 24: Pinhole
- 25: Clip
- 26: Intermediate plate (connecting section)
- 27: Rib (connecting section)
- 28: Notch
- 30: Recessed face (connecting section)
- 31: Axial rod (connecting section)
- 32: Constricted shaft (connecting section)
- 33: Universal joint (connecting section)
- 34: Hook (connecting section)
- 35: Retaining groove
- 36: Bottom groove
- 37: Stepped part
- 38: Shock absorbing body
- 39: Circular hole
- 41: Foundation
- 42: Foundation plate (supporting member)
- 45: Anchor bolt
- 46: Nut
- 47: Female screw
- 51: Pillar
- 53: Preparation hole
- 54: Bolt
- 55: Lag screw (anchoring implement)
- 56: spiral projection
- 57: Female screw
- 58: Deformed bar (anchoring implement)
- 59: Cross beam (connecting member)
- 61: Retainer (lower side)
- 62: Internal screw (left screw)
- 63: Guide hole
- 64: Retainer (upper side)
- 65: Internal screw (right screw)
- 66: Pressing piece (lower side)
- 67: Pressing piece (upper side)
- 68: Bolt
- 71: Retainer
- 72: Restrainer
- 73: Guide hole
- 76: Pressing piece
- 81: Left screw
- 82: Right screw
- S: Space (between supporting member and connecting member)

## Claims

1. A fastening device for fastening a supporting member and a connecting member that are adjacent to each other such as a pair of a foundation plate (42) and a pillar (51) or a pair of a pillar (51) and a cross beam (59), comprising:
a bearing body (11) disposed in a space (S) in which the supporting member and the connecting member face each other;
a plurality of shock absorbing bodies (38) disposed near outer rims in the space (S);
anchoring implements (55, 58) embedded in the supporting member and/or the connecting member to fix the bearing body (11) and the shock absorbing body (38); and
a bolt (54) for fixing the bearing body (11) and the shock absorbing body (38),
wherein the bearing body (11) includes a basic plate (12) that is in surface contact with the supporting member, a mounting plate (14) that is in surface contact with the connecting member, and a connecting section connecting the basic plate (12) and the mounting plate (14) in substantially center of the space (S), and
the shock absorbing body (38) has elasticity to generate reaction force in accordance with displacement of the space (S), one end of the shock absorbing body (38) is fixed to the basic plate (12) or any of the anchoring implements (55, 58) in the supporting member, and the other end is fixed to the mounting plate (14) or any of the anchoring implements (55, 58) in the connecting member.

2. The fastening device according to claim 1, wherein the connecting section comprises:
a lower arm (21) projected from the basic plate (12);
an upper arm (23) projected from the mounting plate (14); and
a pin (22) penetrating the lower arm (21) and the upper arm (23) and axially supporting the basic plate (12) and the mounting plate (14) so as to be rotatable.

3. The fastening device according to claim 1 or 2, wherein the shock absorbing body is a stud bolt (38d) in which a left screw is used at one end and a right screw is used at the other end, and internal screws (62, 65) in which the stud bolts (38d) are screwed are provided in outer rims of the basic plate (12) and the mounting plate (14).

4. The fastening device according to claim 1 or 2, wherein the shock absorbing body is a shaft (38e) having a flange-shaped or groove-shaped step part (37) in a side peripheral face near both ends, and a restrainer (72) retaining the stepped part (37) is provided in outer rim of each of the basic plate (12) and the mounting plate (14).
